# EUROPÄISCHE PATENTSCHRIFT

(11) **EP 2 598 906 B1**
(45) Veröffentlichungstag und Bekanntmachung des Hinweises auf die Patenterteilung: **18.10.2017**
(21) Anmeldenummer: 11749367.6
(22) Anmeldetag: 28.07.2011
(51) Int. Cl.: G01S 17/36, G01S 17/89, G01S 7/497, G01S 7/491, G01S 17/10

(54) **LICHTLAUFZEITKAMERASYSTEM MIT SIGNALPFADUEBERWACHUNG**
LIGHT PROPAGATION TIME CAMERA SYSTEM HAVING SIGNAL PATH MONITORING
SYSTÈME DE CAMÉRA À TEMPS DE PROPAGATION DE LA LUMIÈRE AVEC SURVEILLANCE DU PARCOURS DU SIGNAL

(30) Priorität: 24.09.2010 DE 102010041390; 28.07.2010 DE 102010038591
(43) Veröffentlichungstag der Anmeldung: 05.06.2013
(73) Patentinhaber: pmdtechnologies ag, 57076 Siegen (DE)
(72) Erfinder: WILKS, Ralph, 88074 Meckenbeuren (DE); DAMHOFER, Bernd, 88069 Tettnang (DE)
(74) Vertreter: Schuhmann, Jörg
(86) Internationale Anmeldenummer: PCT/EP2011/063056
(87) Internationale Veröffentlichungsnummer: WO 2012/013760

(56) Entgegenhaltungen:
- DE-A1-102004 037 137
- US-A- 4 600 299
- US-A1- 2004 085 526
- US-B1- 6 463 393

## Beschreibung

Die Erfindung betrifft ein Lichtlaufzeitkamerasystem und ein Verfahren zum Betreiben eines solchen Systems nach Gattung der unabhängigen Ansprüche. Die Erfindung dient insbesondere zur Überwachung des vollständigen Signalpfades wie sie für sicherheitsrelevante Anwendungen - beispielsweise SIL (Safety Integrity Level), ASIL (Automotive Safety Integrity Level) -erforderlich sind. Für sicherheitsrelevante Anwendungen muss jederzeit gewährleistet sein, dass die Kamera erkennt, falls eine der Komponenten nicht spezifikationsgemäß arbeitet. Mit Lichtlaufzeit-Kamerasystem sollen nicht nur Systeme umfasst sein, die Entfernungen direkt aus der Lichtlaufzeit ermitteln, sondern insbesondere auch alle Lichtlaufzeit bzw. 3D-TOF-Kamerasysteme, die eine Laufzeitinformation aus der Phasenverschiebung einer emittierten und empfangenen Strahlung gewinnen. Als Lichtlaufzeit bzw. 3D-TOF-Kameras sind insbesondere PMD-Kameras mit Photomischdetektoren (PMD) geeignet, wie sie u.a. in den Anmeldungen EP 1 777 747, US 6 587 186 und auch DE 197 04 496 beschrieben und beispielsweise von der Firma ,ifm electronic gmbh' als Frame-Grabber O3D zu beziehen sind. Die PMD-Kamera erlaubt insbesondere eine flexible Anordnung der Lichtquelle und des Detektors, die sowohl in einem Gehäuse als auch separat angeordnet werden können. Selbstverständlich sollen mit dem Begriff Kamera bzw. Kamerasystem auch Kameras bzw. Geräte mit mindestens einem Empfangspixel mit umfasst sein, wie beispielsweise das Entfernungsmessgerät O1D der Anmelderin.

Aus der DE 10 2004 037 137 A1 ist ferner eine Entfernungsmessung nach dem PMD-Prinzip bekannt, die zur Erweiterung des Eindeutigkeitsbereichs und Erhöhung der Genauigkeit der Messung vorschlägt, mindestens ein weiteres alternatives optisches Verfahren zur Entfernungsmessung heranzuziehen. Hierzu werden beispielsweise Triangulations- und interferometrischer Verfahren vorgeschlagen.

Ferner sind aus den Dokumenten US 4,600,299, US 2004/0085526 A1 und US 6,463,393 B1 gattungsfremde Entfernungsmessverfahren bekannt, bei dem aufgrund des verwendeten Messprinzips ein Teil der ausgesendeten modulierten elektromagnetischen Strahlung mit Hilfe eines Halbspiegels auf einen Referenzsensor ausgeleitet wird, wobei aus der zeitlichen Differenz des empfangenen und referenzierten Signals eine Objektentfernung bestimmt wird.

Die DE 100 14 125 A1 offenbart ein TOF-Entfernungsmesssystem mit zwei Referenzlichtleitern unterschiedlicher Länge, die den Messungen als Laufzeitreferenzen dienen. Die Laufzeiten der Referenzlichtleiter können einer Entfernung zugeordnet werden und spannen eine lineare Funktion im Orts-Zeit-Raum auf, über die anhand der Laufzeit des gesendeten und empfangenen Lichts eine Entfernung berechnet werden kann.

Die DE 100 22 054 A1 zeigt einen Distanzsensor, bei dem die Phase modulierter Sendelichtstrahlen zur Bestimmung einer Lichtlaufzeit auf einen vorbestimmten Wert geregelt wird, wobei die Regelgröße ein Maß für die Entfernung darstellt. In einem Ausführungsbeispiel ist ein Referenzempfänger gezeigt, der ein Streulicht des gesendeten Lichts erfasst. Die Empfangssignale des Empfängers oder des Referenzempfängers sind wahlweise auf Verstärker des Sensors schaltbar, wobei beispielsweise zur Kompensation von Alterungen die Signale alternierend auf die Verstärkerstufen geführt sind.

Aufgabe der Erfindung ist es, die Vorrichtung im Hinblick einer Funktions- bzw. Signalpfadüberwachung weiter zu gestalten.

Die Aufgabe wird in vorteilhafter Weise durch das erfindungsgemäße Lichtlaufzeitkamerasystem und das Verfahren zum Betreiben eines solchen Systems entsprechend der unabhängigen Ansprüche gelöst.

Als Vorrichtung ist ein Lichtlaufzeitkamerasystem mit einer Lichtlaufzeitkamera mit einem Photosensor, einer Beleuchtungslichtquelle und einem Modulator vorgesehen, wobei mit Hilfe des Modulators der Photosensor und die Beleuchtungslichtquelle mit einer Modulation bzw. Modulationsfrequenz beaufschlagt werden. Der Photosensor weist mindestens einen Empfangspixel auf und ist vorzugsweise als Photomischdetektor ausgebildet. Vorteilhaft ist im Bereich der Beleuchtungslichtquelle ein Kontrollsensor derart angeordnet, dass zumindest ein Teil der von der Beleuchtungslichtquelle emittierten Strahlung mittelbar oder unmittelbar auf den Kontrollsensor gelangen kann.

Bevorzugt stellt der Kontrollsensor in Abhängigkeit der erfassten Strahlung ein elektrisches Ausgangssignal zur Verfügung, das dem zeitlichen Intensitätsverlauf der von der Beleuchtungslichtquelle empfangenen Strahlung entspricht bzw. den zeitlichen Strahlungsverlauf charakterisiert, wobei der Kontrollsensor mit mindestens einer Referenzlichtquelle oder einem elektrischen Mischer verbunden ist.

Dieses Vorgehen erlaubt es insbesondere, die Überwachung des Beleuchtungsmoduls bzw. der Beleuchtungslichtquelle über einen separaten und unabhängigen Signalkanal.

Ebenso vorteilhaft ist ein Verfahren vorgesehen, bei dem das Lichtlaufzeitkamerasystem in einem Distanzmessintervall und vorzugsweise in einem Kontrollintervall betrieben werden kann. Im Distanzmessintervall wird von der Beleuchtungsquelle entsprechend der aufgeprägten Modulation ein moduliertes Licht emittiert. Ausgehend von der Lichtlaufzeit, insbesondere der Phasenverschiebung, des am Photosensor ankommenden Lichts bzw. Nutzlichts lässt sich in bekannter Weise ein Entfernungswert ermitteln.

Wobei zusätzlich mit Hilfe eines Kontrollsensor ein Teil des von der Beleuchtungsquelle emittierten Lichts erfasst und in Abhängigkeit des erfassten Lichts ein Ausgangssignal zur weiteren Verarbeitung zur Verfügung gestellt wird, und in Abhängigkeit des Ausgangssignals des Kontrollsensors mindestens eine Referenzlichtquelle oder ein elektrischer Mischer betrieben wird.

Da das Ausgangssignal des Kontrollsensors im Wesentlichen dem zeitlichen Intensitätsverlauf der Beleuchtungsquelle entspricht, bildet sich durch ein derartiges Vorgehen das Modulationsverhalten der Beleuchtungsquelle über die Referenzlichtquelle wieder auf den Referenz- und/oder Photosensor ab.

Dieses Vorgehen erlaubt es in vorteilhafter Weise, den kompletten Signalpfad ausgehend vom Modulator hin zur Beleuchtungslichtquelle und zurück zum Photosensor auf seine Funktionsfähigkeit zu überprüfen. Lässt sich beispielsweise kein plausibles Ausgangssignal ermitteln, ist davon auszugehen, dass eine Störung im Signalpfad vorliegt. Ggf. kann dann über die Auswerteeinheit eine entsprechende Fehlermeldung und/oder Fehlerreaktion eingeleitet werden.

So ist es in einfacher Art und Weise möglich, den gesamten Signalpfad zu überwachen und jede einzelne Messung zu plausibilisieren. Es können sowohl der Ausfall einzelner Komponenten erkannt werden als auch eine Korrumpierung der Signale selbst.

Durch die in den abhängigen Ansprüchen aufgeführten Maßnahmen sind vorteilhafte Weiterbildungen und Verbesserungen der in den unabhängigen Ansprüchen angegebenen Erfindung möglich.

Bevorzugt ist der Kontrollsensor mit der mindestens einen Referenzlichtquelle oder dem elektrischen Mischer über einen elektrischen Übertragungskanal verbunden, wobei besonders vorteilhaft der Übertragungskanal für eine digitale Übertragung des Ausgangssignals des Kontrollsensors ausgebildet ist.

Besonders nützlich ist es, im Bereich des Photosensors mindestens eine Referenzlichtquelle anzuordnen, und zwar derart, dass eine von der Referenzlichtquelle emittierte Strahlung einen Referenzphotosensor und/oder den Photosensor beleuchtet.

Eine derartige Anordnung ermöglicht es, den Referenz- und/oder den Photosensor zu Test- oder Kalibrierungszwecken mit einem geeigneten Testlicht zu beleuchten. Beispielsweise kann der Sensor mit einem konstanten oder mit einem modulierten Licht bzw. Testlicht beleuchtet werden, wobei in Abhängigkeit der von den Sensoren erzeugten Signalen die Funktionsfähigkeit des Sensors bzw. des Signalpfads beurteilt werden kann.

In einer besonders bevorzugen Ausgestaltung ist eine erste Referenzlichtquelle zur Beleuchtung des Referenzphotosensor und eine zweite Referenzlichtquelle zur Beleuchtung des Photosensors vorgesehen.

Die Beleuchtung des Referenzphotosensors mit der ersten Referenzlichtquelle erlaubt, unter anderem bei einer Beleuchtung in Abhängigkeit des Ausgangssignals des Kontrollsensors, eine Überprüfung der Funktion der Beleuchtungslichtquelle. Bleibt ein Signal am Referenzphotosensor aus, ist davon auszugehen, dass dieser Signalpfad fehlerhaft ist, und mit hoher Wahrscheinlichkeit die Beleuchtungslichtquelle ausgefallen ist.

Die Beleuchtung des Photosensors mit der zweiten Referenzlichtquelle erlaubt beispielsweise eine Funktionsüberprüfung des Photosensors in Messpausen. Insbesondere kann es auch vorgesehen, sein vor oder nach einer abgeschlossenen Distanzmessung eine Kontrollmessung durchzuführen.

Die Beaufschlagung des elektrischen Mischers mit den Ausgangssignalen des Kontrollsensors erlaubt, wie bei der Beleuchtung mit Hilfe einer Beleuchtung des Referenzphotosensors mit der ersten Referenzlichtquelle, eine Überprüfung der Funktion der Beleuchtung bzw. des zugehörigen Signalpfads.

Diese Vorteile finden sich dementsprechend auch in den weiteren erfindungsgemäßen Verfahren wieder.

Bevorzugt ist ein Verfahren für ein Lichtlaufzeitkamerasystem mit einem elektrischen Mischer vorgesehen, bei dem die Signale des elektrischen Mischers im Hinblick auf eine fehlerfreie Funktion des Signalpfads ausgewertet werden und/oder Kompensationsmaßnahmen hinsichtlich der Distanzmessung eingeleitet werden. Durch dieses Vorgehen kann der Signalpfad und auch die Distanzmessung vorteilhaft permanent überprüft werden.

Bevorzugt ist es vorgesehen, mindestens eine Referenzlichtquelle in Abhängigkeit des vom Kontrollsensor erfassten Lichts bzw. dessen Ausgangssignal zu betreiben.

Ebenso vorteilhaft ist ein Verfahren für eine Lichtlaufzeitkamerasystem mit mindestens einer Referenzlichtquelle vorgesehen, bei dem in einem Kontrollintervall bzw. einer Kontrollmessung die mindestens eine Referenzlichtquelle den Photosensor beleuchtet und die Signale des Photosensors im Hinblick auf eine fehlerfreie Funktion des Signalpfads und/oder Photosensors ausgewertet werden und/oder Kompensationsmaßnahmen hinsichtlich der Distanzmessung eingeleitet werden.

Ferner ist in vorteilhafter Weise vorgesehen, während eines Distanzmessintervalls den Referenzphotosensor mit Hilfe der ersten Referenzlichtquelle zu beleuchten und ausgehend von den Signalen des Referenzphotosensors eine Fehlfunktion der Lichtlaufzeitkamera bzw. des Lichtlaufzeitkamerasystems zu erkennen und/oder Kompensationsmaßnahmen hinsichtlich der Distanzmessung einzuleiten.

Bevorzugt ist es auch vorgesehen, dass der Photosensor vor oder nach einer oder mehreren Distanzmessungen bzw. Phasenmessungen in einem Kontrollintervall mit Hilfe der zweiten Referenzlichtquelle beleuchtet wird.

Darüber hinaus ist es vorteilhaft, ein Testbetrieb vorzusehen, bei dem mindestens eine Referenzlichtquelle mit Testsignalen beaufschlagt wird.

Nachfolgend wird die Erfindung anhand von Ausführungsbeispielen unter Bezugnahme auf die Zeichnungen näher erläutert.

Es zeigen schematisch:

Figur 1 das Grundprinzip einer Lichtlaufzeitkamera nach dem PMD-Prinzip,
Figur 2 ein erfindungsgemäßes Lichtlaufzeitkamerasystem,
Figur 3 eine mögliche Bauelementeanordnung eines erfindungsgemäßen Systems,
Figur 4 beispielhaft einen möglichen Ablauf einer Signalpfadüberwachung,
Figur 5 ein weiteres Beispiel für eine Signalpfadüberwachung.

Bei der nachfolgenden Beschreibung der bevorzugten Ausführungsformen bezeichnen gleiche Bezugszeichen gleiche oder vergleichbare Komponenten.

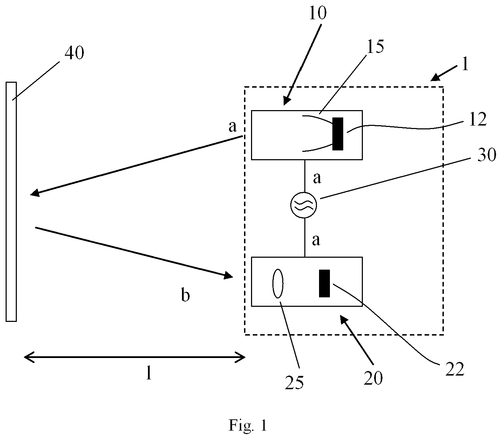

Figur 1 zeigt eine Messsituation für eine optische Entfernungsmessung mit einer Lichtlaufzeit-Kamera, wie sie beispielsweise aus der DE 197 04 496 bekannt ist.

Das Lichtlaufzeit-Kamerasystem 1 umfasst eine Sendeeinheit bzw. ein Beleuchtungsmodul 10, 100 mit einer Beleuchtungslichtquelle 12 und einer dazugehörigen Strahlformungsoptik 15 sowie eine Empfangseinheit bzw. TOF-Kamera 20 mit einer Empfangsoptik 25 und einem Photosensor 22. Der Photosensor 22 weist mindestens ein Pixel, vorzugsweise jedoch ein Pixel-Array, auf und ist insbesondere als PMD-Sensor ausgebildet. Die Empfangsoptik 25 besteht typischerweise zur Verbesserung der Abbildungseigenschaften aus mehreren optischen Elementen. Die Strahlformungsoptik 15 der Sendeeinheit 10 ist vorzugsweise als Reflektor ausgebildet. Es können jedoch auch diffraktive Elemente oder Kombinationen aus reflektierenden und diffraktiven Elementen eingesetzt werden.

Das Messprinzip dieser Anordnung basiert im Wesentlichen darauf, dass ausgehend von der Phasenverschiebung des emittierten und empfangenen Lichts die Laufzeit des emittierten und reflektierten Lichts ermittelt werden kann. Zu diesem Zwecke werden die Lichtquelle 12 und der Photosensor 22 über einen Modulator 30 gemeinsam mit einer bestimmten Modulationsfrequenz mit einer ersten Phasenlage a beaufschlagt. Entsprechend der Modulationsfrequenz sendet die Lichtquelle 12 ein amplitudenmoduliertes Signal mit der Phaselage a aus. Dieses Signal bzw. die elektromagnetische Strahlung wird im dargestellten Fall von einem Objekt 40 reflektiert und trifft aufgrund der zurückgelegten Wegstrecke entsprechend phasenverschoben mit einer zweiten Phasenlage b auf den Photosensor 22. Im Photosensor 22 wird das Signal der ersten Phasenlage a des Modulators 30 mit dem empfangenen Signal, das die laufzeitbedingte zweiten Phasenlage b aufweist, gemischt, wobei aus dem resultierenden Signal die Phasenverschiebung bzw. die Objektentfernung I ermittelt wird.

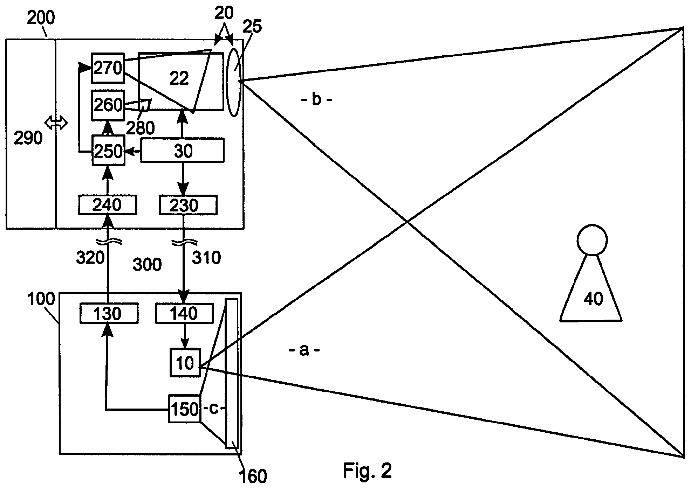

Figur 2 zeigt ein erfindungsgemäßes Lichtlaufzeitkamerasystem 1, bei dem die Sende- und Empfangseinheit 10, 20 in einem separaten Beleuchtungsmodul 100 und einem separaten Kameramodul 200 angeordnet sind. Der Modulator 30 bzw. Signalgeber erzeugt in seiner bevorzugten Ausgestaltung ein periodisch moduliertes Signalpaket in der Länge von einigen Mikrosekunden bis einigen Millisekunden und vorzugsweise mit einer Frequenz im Megaherzbereich. Mit dem Modulationssignal wird sowohl der Photosensor 22 als auch ein Signaltreiber 230 beaufschlagt. Über ein Signalkabel 300 sind das Kameramodul 200 und das Beleuchtungsmodul 100 miteinander verbunden. Die Signale des Signaltreibers 230 werden über den Übertragungskanal A (Hinkanal) 310 an den Signalempfänger 140 des Beleuchtungsmoduls 100 übertragen. In einer bevorzugten Ausführungsform geschieht dies mittels eines elektrischen LVDS-Signals (Low Voltage Differential Signaling). Denkbar sind jedoch auch andere elektrische oder optische Signalübertragungswege.

Im Beleuchtungsmodul wird das Signal vom Signalempfänger 140 empfangen und für die Beleuchtungseinheit 10 aufbereitet, die ein entsprechendes Lichtsignal a aussendet. In der bevorzugten Ausgestaltung tritt das Lichtsignal a durch eine überwiegend transparente Frontabdeckscheibe 160 und beleuchtet die messrelevante Szene bzw. Objekte 40. Die Objekte 40 reflektieren einen Teil des Lichtsignals zurück in die Kamera 200 und werden dort vom Photosensor 22 empfangen. Wie bereits beschrieben, wird für jedes Pixel ausgehend von der Phasenverschiebung des Lichtsignals ein Objektabstand bestimmt.

Erfindungsgemäß ist es nun vorgesehen, zusätzlich zu der pixelindividuellen Entfernungsbestimmungen die Funktionsfähigkeit der Signalverarbeitung zu überwachen. Hierzu ist im Beleuchtungsmodul 100 ein Kontrollsensor 150 vorgesehen, der einen Teil c des ausgesandten Lichtsignals a empfängt. In einer bevorzugten Ausgestaltung handelt es sich bei dem Kontrollsensor um eine schnelle Photodiode, die ihr Lichtsignal beispielsweise durch Reflektionen an der lichtdurchlässigen Frontabdeckscheibe 160 erhält. Denkbar ist beispielsweise auch ein Lichtempfang durch direkte Sicht des Kontrollsensors 150 auf die Beleuchtungseinheit 10 oder durch die Verwendung geeigneter anderer optischer Elemente wie zum Beispiel Spiegel oder Lichtleiter.

Der Kontrollsensor 150 stellt als Signal vorzugsweise ein analoges Ausgangssignal zur Verfügung.Dieses Ausgangssignal wird mittels eines Signaltreibers 130 geeignet aufbereitet und mittels des Signalkabels 300 über den Übertragungskanal B (Rückkanal) 320 an die Empfangseinheit 240 des Kameramoduls 200 übertragen. Auch hier kann der Rückkanal beispielsweise über ein LVDS-Signal im selben Signalkabel 300 übertragen werden. Denkbar sind auch andere Übertragungsarten, auch muss der Kanal A und B nicht notwendiger Weise dieselbe Übertragungsart verwenden.Vorzugsweise werden die Signale über das Signalkabel digital übertragen. Beispielsweise kann der Signaltreiber 130 so ausgestaltet sein, dass das analoge Ausgangssignal des Kontrollsensors 150 vor der Übertragung digitalisiert wird. Selbstverständlich kann die Digitalisierung auch bereits im Kontrollsensor 150 oder in einem zwischengeschalteten AD-Wandler erfolgen.

Je nach Anwendungsfall können unterschiedliche Informationen des analogen Signals übertragen werden. Für eine einfache Signalpfadüberwachung reicht es in der Regel aus, nur die Ein- und/oder Ausschaltflanken des vom Kontrollsensors 150 erfassten Lichts zu übertragen. Für eine detailliertere Fehleranalyse ist es jedoch auch denkbar, die Informationen über die Amplitude als Bit-Wert und/oder ggf. auch als ein gesampeltes Signal digital zu übertragen.

Abhängig vom Anwendungsfall kann auch bereits der Kontrollsensor 150 unterschiedlich ausgebildet sein. Prinzipiell sollte das Ausgangssignal die charakteristischen Schaltflanken des von der Beleuchtungsquelle empfangenen Lichts abbilden können. Die Amplitude des Ausgangssignals kann in einem solchen Fall ggf. sogar in die Sättigung gehen. Ist auch eine Analyse der Amplitude gewünscht, sollte ein solcher Sättigungsfall jedoch vermieden werden.

Die digitale Übertragung der Signale ist gewöhnlich gegenüber einer reinen analogen Übertragung störunanfälliger. Dennoch kann es für unkritische Applikationen und/oder für kleinere Signalleitungslängen durchaus sinnvoll sein, zumindest einen Kanal A, B auch analog auszuführen.

Das über den Rückkanal B vorzugsweise digital übertragene Signal wird vom Signalempfänger 240 empfangen und für die nachfolgende erste und zweite Referenzlichtquelle 260, 270 aufbereitet. Die Aufbereitung kann beispielsweise derart erfolgen, dass aus dem übertragenen digitalen Signal ein analoges Ansteuerungssignal für die Referenzlichtquellen 260, 270 erzeugt wird.

Die Referenzlichtquellen 260, 270 dienen zur Referenzmessung und/oder zur Überwachung des Signalweges. Die Überwachung geschieht auf zweifache Weise. Beide Verfahren können unabhängig voneinander angewendet werden. Bevorzugt ist jedoch eine Kombination beider Verfahren. Die Auswahl der Referenzlichtquellen 260, 270 erfolgt über einen Signalumschalter 250.

Die Referenzmessung wird vorzugsweise während der Hauptmessung, d.h. während der Distanzmessung, ausgeführt. Hierbei wird ein Referenzphotosensor 280, bestehend aus einem Referenzpixel bzw. einer Referenzpixelstruktur, von der ersten Referenzlichtquelle 260 beleuchtet. Bevorzugt ist es vorgesehen, dass der Referenzphotosensor 280 nicht von einem Licht, das durch die Empfangsoptik 25 dringt, beleuchtet wird.

Dieses Vorgehen erlaubt verschiedene Möglichkeiten der Funktionsüberwachung. Erfindungsgemäß ist es vorgesehen, dass die erste Referenzlichtquelle 260 in Abhängigkeit des von dem Kontrollsensor 150 empfangenen Lichts moduliert wird. Wird von Seiten des Kontrollsensors 150 kein Lichtsignal empfangen, so wird auch die erste Referenzlichtquelle 260 kein Licht emittieren. Da in diesem Fall auch über den Referenzphotosensor 280 kein Signal empfangen wird, kann beispielsweise über eine Auswerteeinheit 290 eine Fehlfunktion des Kamerasystems signalisiert oder eine entsprechende Fehlerreaktion aktiviert werden.

Bei einer funktionierenden Beleuchtungseinheit 10 bzw. Sendesignalkette bzw. Signalpfad empfängt der Kontrollsensor 150 ein entsprechend moduliertes Licht und überträgt es in gleicher Modulationsfrequenz an den Umschalter 250 respektive an die erste Referenzlichtquelle 260. Ausgehend von diesem Referenzlichtsignal können Abweichungen des Lichtsignals festgestellt und kompensiert werden, wie beispielsweise temperaturbedingte Verschiebung der Phase bzw. Aussendezeiten der Lichtpulse oder auch eine Alterung der Lichtquelle oder des Photosensors oder ähnliches.

In einer weiteren erfindungsgemäßen Ausgestaltung ist es vorgesehen, nach der Distanzmessung eine zusätzliche Kontrollmessung durchzuführen. In dieser Kontrollmessung bzw. Signalpfadüberwachung beleuchtet die zweiten Referenzlichtquelle 270 den gesamten Photosensor 22 und gegebenenfalls auch den Referenzphotosensor 280. Diese Kontrollmessung dient dazu, den Photosensor 22 selbst inklusive Auslese- und Auswertevorgang zu überwachen. Bevorzugt erfolgt die Ausleuchtung des Photosensors nicht gleichmäßig, sondern in einer ungleichmäßigen Art und Weise, so dass im Wesentlichen von jedem Pixel eine andere Information, beispielsweise ein anderer Helligkeitswert, gemessen wird. Durch ein solches Vorgehen kann zusätzlich überwacht werden, ob alle Pixel korrekt ausgelesen werden. Bei Abweichung, die außerhalb eines tolerierten Bereichs bzw. oberhalb oder unterhalb eines tolerierten Grenzwertes liegen, kann es beispielsweise vorgesehen sein, eine Fehlfunktion zu signalisieren und/oder entsprechende Fehlerreaktionen einzuleiten.

Der Ablauf einer Referenzmessung und/oder Kontrollmessung ist vorzugsweise in einem Programm der Auswerteeinheit 290 oder in der Kamera hinterlegt. Ferner können die Messungen derart ausgelegt sein, dass mit ihnen beispielsweise die Kamera bzw. das Kamerasystem oder der Photosensor 22 abgeglichen werden können. Die für die Kontrollmessung benötigte Zeit kann wesentlich kürzer gewählt werden als die Zeit, die für die Distanzmessung benötigt wird, da mit der Lichtintensität nicht die Umgebung ausgeleuchtet werden muss, sondern nur ein Signal für die zweite Referenzlichtquelle 270 erzeugt werden muss. Die von der zweiten Referenzlichtquelle 270 erzeugte Lichtmenge sollte bevorzugt größer sein als die Umgebungslichtmenge.

Die Beleuchtung des Referenzphotosensors 280 und/oder des Photosensors 22 durch die erste und/oder zweite Referenzlichtquelle 260, 270 muss nicht zwingend direkt erfolgen, sondern kann auch indirekt erfolgen, beispielsweise durch Reflektionen an einem Deckglas der Empfangsoptik 25 oder sonstige Flächen oder Bauteilen innerhalb der Kamera.

Die Wellenlängen der Referenzlichtquellen 260, 270 können ferner voneinander unterschiedlich sein und/oder sich von der Wellenlänge der Beleuchtungslichtquelle 12 unterscheiden. So wäre es z.B. in einer vorteilhaften Ausgestaltung möglich, durch geeignete optische Elemente, wie z.B. Interferenzfilter, zu erreichen, dass die zweite Referenzlichtquelle 270 sowohl den Photosensor 22 als auch den Referenzphotosensor 280 beleuchtet, die erste Referenzlichtquelle 260 jedoch nur den Referenzphotosensor 280. Auch eine Abschottung des Referenzphotosensor 280 vom extern eintretenden Lichtsignal -b- wäre alternativ z.B. zu optischen Blenden so auf vorteilhafte Weise möglich.

In einer weiteren Ausgestaltung wäre es denkbar, anstatt der ersten Referenzlichtquelle 260 und den Referenzphotosensor 280 einen rein elektrischen Mischer vorzusehen. Das heißt, dass das durch den Kontrollsensor 150 optisch erfasste modulierte Licht nicht wieder über eine Lichtquelle emittiert und dann über ein Pixel empfangen, sondern direkt als elektrisches Signal auf einen Mischer gelegt werden kann, um darüber ein Signal zu generieren. Dieses Vorgehen hat den Vorteil, dass auf eine zusätzlichen Lichtstrecke verzichten werden kann.

Darüber hinaus kann es auch vorgesehen sein, das Ausgangssignal des Kontrollsensors direkt bzw. über einen Übertragungsweg der Auswerteeinheit 290 zur Verfügung zu stellen, um dort das Signal beispielsweise direkt auszuwerten und/oder weiteren Analyseeinheiten oder Modulen zur Verfügung zu stellen.

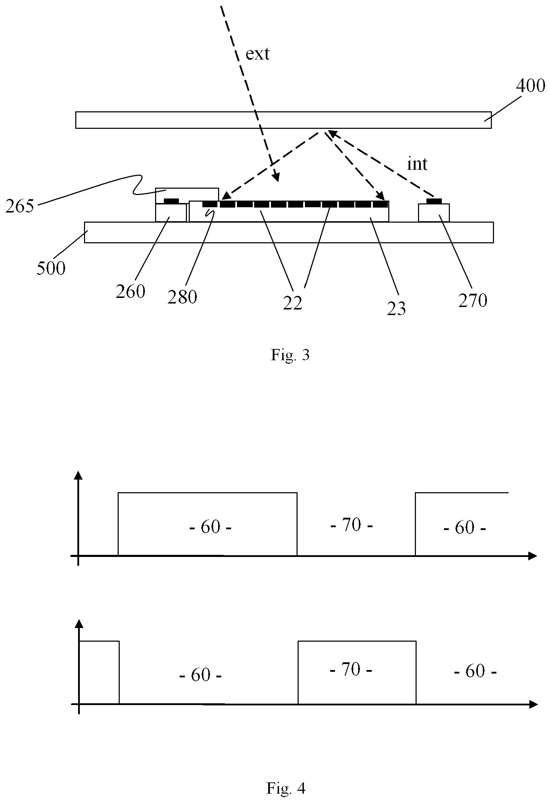

Figur 3 zeigt beispielhaft eine mögliche erfindungsgemäße Anordnung relevanter Bauelemente. Auf einem Bauelementeträger 500 sind nacheinander die erste Referenzlichtquelle 260, ein Photosensor-Bauelement 23 und die zweite Referenzlichtquelle 270 angeordnet. Das Photosensor-Bauelement 23 trägt im dargestellten Beispiel sowohl den Photosensor 22 für die Distanzmessung als auch den Referenzphotosensor 280.

Der Referenzphotosensor 280 zeichnet sich im dargestellten Beispiel dadurch aus, dass zumindest der lichtempfindliche Bereich des Referenzphotosensors 280 über einen Lichtleitkanal 265 mit der lichtemittierenden Fläche der ersten Referenzlichtquelle 260 verbunden ist. Der Lichtleitkanal 265 ist vorzugsweise so ausgeführt, dass keine nennenswerte Strahlung nach außen gelangen kann. Durch dieses Vorgehen sind die erste Referenzlichtquelle 260 und der Referenzphotosensor 280 optisch miteinander verbunden.

Auf der den Bauelementen 22, 23, 270 gegenüberliegenden Seite ist im vorliegenden Beispiel ein transparentes Abdeckglas 400 angeordnet. Externe Strahlung (ext) bzw. das Nutzlicht für die Lichtlaufzeitmessung kann im Wesentlichen ungehindert durch das Abdeckglas 400 dringen. Die Referenzlichtquelle 270 emittiert im Betrieb Licht in Richtung des Abdeckglases 400. Ein Teil des internen Lichts (int) wird das Abdeckglas 400 durchdringen und nach außen gelangen, ein anderer Teil wird am Abdeckglas 400 reflektiert und gelangt auf die photosensitive Schicht des Photosensors 22 und kann dort erfasst werden.

Das gezeigte Abdeckglas 400 stellt exemplarisch nur eine Möglichkeit dar, das Licht der Referenzlichtquelle 270 auf den Photosensor 22 zu projizieren. Grundsätzlich kann anstelle oder auch in Ergänzung zum Abdeckglas 400 eine reflektierende Fläche eingesetzt werden, die eine zumindest mittelbare Beleuchtung des Photosensors 22 ermöglicht. Auch ist es denkbar, dass die Innenflächen des Kameragehäuses selbst als Reflektionsflächen ausreichen.

Selbstverständlich ist es auch denkbar, die Referenzlichtquelle im Gehäuse derart anzuordnen, dass der Photosensor 22 von der Referenzlichtquelle 270 direkt beleuchtet werden kann.

Unabhängig von der Anordnung im Einzelnen sollte jedoch bei der Kontrollmessung bzw. Signalpfadüberwachung sichergestellt werden, dass das extern eindringende Licht (ext) gegenüber dem internen Licht (int) vernachlässigt werden kann.

In einer bevorzugten Realisierungsform wird als Referenzphotosensor 280 einfach ein Pixel oder ein Pixel-Array des vorhandenen Photosensors 22 für die Referenzmessungen herangezogen. Dieses Vorgehen hat den Vorteil, dass das elektrische und physikalische Verhalten der so ausgewählten Referenz das Verhalten des übrigen "Mess"-Photosensors 22 quasi identisch widerspiegelt.

In einer weiteren vorteilhaften Ausführungsform ist es auch denkbar, den Referenzphotosensor 280 eigenständig auf dem Photosensor-Bauelement 23 oder auch als separates Bauelement aufzubauen.

Wie bereits zuvor beschrieben, kann die Phasenmischung auch rein elektrisch erfolgen, so dass dann ggf. auf einen Referenzphotosensor 280 mitsamt optischer Ankopplung verzichtet werden kann.

Figur 4 zeigt einen zeitlichen Verlauf einer Distanzmessung 60 und Kontrollmessung 70. Im zeitlichen Intervall der Distanzmessung können beispielsweise eine oder auch mehrere Distanzmessungen vorgenommen werden, ggf. kann eine Distanzmessung zunächst auch nur auf eine einzige Phasenmessung beschränkt sein. Nach einem erfolgten Distanzmessintervall 60 erfolgt eine Pause, in der die erfindungsgemäße Kontrollmessung 70 durchgeführt werden kann. Im Distanzmessintervall 60 sind aufgrund der typischerweise geringen Lichtintensität des empfangenen Nutzsignals in der Regel relativ lange Integrationszeiten des Photosensors 22 notwendig. Da das interne Licht der zweiten Referenzlichtquelle 270 vorzugsweise mit einer hohen Intensität am Photosensor 22 anliegt, können für die Kontrollmessung in der Regel kürzere Integrationszeiten verwendet werden. Darüber hinaus kann ggf. auch die Anzahl der Kontrollmessungen auf eine reduziert werden, so dass in Summe das Kontrollintervall 70 zeitlich deutlich kürzer gehalten werden kann als das Distanzmessintervall 60.

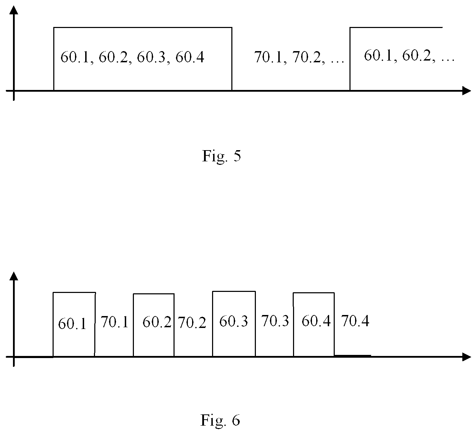

Figur 5 zeigt ein weiteres Ausführungsbeispiel, bei dem im Distanzmessintervall 60 mehrere Messungen vorgesehen sind, bei denen die Beleuchtung in verschiedenen Phasenlagen bzw. Phasenverschiebungen 60.1, 60.2, 60.3 60.4 - beispielsweise um 0°, 90°, 180° und 270° - betrieben wird. Auf Grundlage dieser Messungen wird beispielsweise ein zuverlässiger Abstands- bzw. Distanzwert gewonnen.

Die Phasenlage der Beleuchtung wird typischerweise in Relation zur Modulationsphase des Photosensors 22 verschoben. Grundsätzlich kann aber auch die Modulationsphase des Photosensors 22 gegenüber der Phasenlage der Beleuchtung verschoben werden.

Erfindungsgemäß ist es vorgesehen, auch während der Kontrollmessung 70 Messungen zu unterschiedliche Phasenverschiebungen 70.1, 70.2 ...vorzunehmen.

Die Umschaltung zwischen Distanzmessung 60 und Kontrollmessung 70 wird vorzugsweise vom Modulator 30 eingeleitet. Typischerweise sind im Modulator 30 auch Funktionen hinterlegt, die die Umschaltung und/oder Phasenverschiebungen steuern. Abhängig von der im Modulator 30 durchgeführten oder geplanten Funktion kann beispielsweise der Umschalter 250 angesteuert oder die Beleuchtungsquelle 12 mit einem ggf. phasenverschobenen Signal betrieben werden.

Alternativ können diese Funktionen, zumindest teilweise, auch in der Auswerteeinheit 290 hinterlegt sein oder der Umschalter 250 ist bereits Teil der Auswerteeinheit 290.

Die Kontrollmessung 70 kann ggf., wie in Figur 6 gezeigt, auch direkt nach bzw. vor einer Phasenmessung 60.1, 60.2 ... durchgeführt werden.

Ferner ist es auch denkbar, dass zusätzlich oder ggf. alternativ zu der eigentlichen Signalpfadüberwachung bzw. Kontrollmessung ein Modulationssignal vom Modulator 30 direkt auf eine der Referenzlichtquellen 260, 270 geführt wird. Dieses Vorgehen hat den Vorteil, dass beispielsweise bei einem als fehlerhaft erkannten Signalpfad eine weitere Fehleranalyse durchgeführt werden kann, indem der Photosensor 22 bzw. der Referenzphotosensor 280 ohne Einschalten der Beleuchtungsquelle 12 mit moduliertem Licht beleuchtet werden kann. Arbeitet in einem solchen Fall der Sensor 22, 280 fehlerfrei, ist von einer defekten Beleuchtung 10 bzw. einem defekten Signalpfad auszugehen.

Des weiteren kann es vorgesehen sein, dass die Auswerteeinheit 290 bzw. der Modulator 30 für einen Testbetrieb spezielle Testsignale zur Verfügung stellt. Dieser Testbetrieb könnte in einer Kontroll- und/oder Referenzmessung integriert werden oder in einem eigenständigen Testintervall durchgeführt werden.

Beispielsweise könnte in einer solchen zusätzlichen Kontrollmessung bzw. Testmessung eine Sequenz von Phasenverschiebungen bereitgestellt werden, die im Ergebnis zu einer bestimmten gemessen Sequenz von Laufzeiten bzw. Abstandswerten führen sollte. Weichen die Ergebnisse von den erwarteten ab, können je nach Größe der Abweichungen unterschiedliche Reaktionen ausgelöst werden. Beispielsweise könnte bei einer noch zu tolerierenden Abweichung eine Kalibrierung des Photosensors 22 bzw. des Auswertealgorithmus erfolgen. Liegt die Abweichung außerhalb einer zugelassenen Toleranz ist beispielsweise eine Fehlersignalisierung denkbar.

Auch andere Testsignale mit besonderen Eigenschaften in Amplitude und Frequenz, insbesondere auch konstanter Amplitude, sind denkbar.

Ausgehend von den Ergebnissen während der Kontroll- und/oder der Referenzmessung können beispielsweise auch die im Distanzmessintervall gewonnenen Lichtlaufzeit- bzw. Distanzwerte beurteilt werden. Beispielsweise können die Messwerte der Distanzmessung abhängig von den Ergebnissen der parallelen Referenzmessungen plausibilisiert, korrigiert und/oder gewichtet oder ggf. verworfen werden. Selbstverständlich kann zu diesem Zwecke auch eine oder mehrere der Distanzmessung vorgeschalteten oder nachfolgenden Kontrollmessungen herangezogen werden.

In einer weiteren Ausgestaltung kann es ferner vorgesehen sein, während der Kontrollmessung die Strahlleistung der Beleuchtungslichtquelle 12 zu reduzieren, so dass in vorteilhafter Weise die Energieaufnahme des Systems reduziert werden kann. Die Reduzierung der Leistung kann ohne Weiteres vorgenommen werden, da für die Signalpfadüberwachung kein von einem externen Objekt reflektiertes Licht notwendig ist, sondern nur sichergestellt werden muss, dass der Kontrollsensor 150 ausreichend Licht von der Beleuchtungsquelle 10, 12 erhält.

In den vorgenannten Ausführungsbeispielen wurde die Erfindung vornehmlich anhand einer PMD-Lichtlaufzeitkamera erläutert. Selbstverständlich ist die Erfindung nicht auf diesen Typ der Lichtlaufzeitmessung beschränkt.

Ohne weiteres ist die Erfindung auch auf andere Varianten der Lichtlaufzeitbestimmung bzw. Kameras, die anhand von Lichtlaufzeiten Distanzdaten bzw. dreidimensionale Umfeldinformationen ermitteln, übertragbar.

Auch bei einer direkten Bestimmung einer Lichtlaufzeit ist, wie auch bei einer PMD-Kamera, eine Beleuchtungslichtquelle und ein Photosensor zum Empfang des vom Objekt reflektierten Nutzlichts vorgesehen. In gleicher Weise kann mit dem erfindungsgemäßen Kontrollsensor die Beleuchtungslichtquelle überwacht und der Photosensor mit den erfindungsgemäßen Referenzlichtquellen beleuchtet werden.

Die verwendete Bezeichnung "moduliertes Licht" soll insofern auch das für eine direkte Lichtlaufzeitmessung typischerweise "gepulstes Licht" mit umfassen. Insofern ist der beschriebene Modulator auch im Sinne eines Pulsgenerators bzw. auch als Pulsweitenmodulator zu betrachten.

Der Modulator kann entsprechend auch als Taktgeber für die relevanten Bauelemente einer entsprechenden Lichtlaufzeitmessung angesehen werden.

Die Ausführung gem. Figur 2 bezieht sich vornehmlich auf eine Lichtlaufzeitkamera 1, die in zwei separate Module, nämlich einem Beleuchtungs- und einem Kameramodul 100, 200, aufgeteilt ist. Die Verwendung eines Signalkabels 300 und die Verwendung von Signaltreibern 130, 230 und Signalempfängern 140, 240 kommt vornehmlich für diesen Anwendungsfall in Betracht.

Bei einer Zusammenfassung von Beleuchtung und Kamera 100, 200 in einem Gehäuse ist diese Signalkette von Treiber und Empfänger nicht unbedingt nötig, wenngleich sie durchaus Verwendung finden kann. In einem gemeinsamen Gehäuse kann bevorzugt hierauf verzichtet werden und beispielsweise die Signale des Kontrollsensors direkt auf den Umschalter 250 bzw. auf die Referenzlichtquellen 260, 270 gegeben werden.

Insbesondere sind Varianten in der Ausgestaltung denkbar. So kann es beispielsweise auch vorgesehen sein, dass der Kontrollsensor 150 in der Nähe der Beleuchtungslichtquelle 10 die Funktion des Referenzphotosensors übernimmt.

Auch ist es denkbar dass dann der Referenzphotosensor nicht von der ersten Referenzlichtquelle 260 beleuchtet wird, sondern mittel- oder unmittelbar von der Beleuchtungsquelle 10.

### Bezugszeichenliste

10 Sendeeinheit
100 Beleuchtungsmodul
140 Signalempfänger
12 Beleuchtungslichtquelle
160 Abdeckscheibe
150 Kontrollsensor
130 Signaltreiber (z.B. Modulationstreiber für LVDS)
124 ausgesendetes Licht
126 direkt empfangenes Licht
200 Kameramodul
20 Empfangseinheit
22 Photosensor
23 Photosensor-Bauelement
230 Signaltreiber
240 Signalempfänger
250 Signalumschalter
260 erste Referenzlichtquelle
265 Lichtkanal
270 zweite Referenzlichtquelle
280 Referenzphotosensor, Referenzpixel, Referenzpixelstruktur
290 Auswerteeinheit
25 Empfangsoptik für Nutzlicht
30 Modulator, Modulationsgenerator
300 Signalkabel
310 Übertragungskanal A (Hin-Kanal)
320 Übertragungskanal B (Rück-Kanal)
40 Objekt
400 Abdeckglas, Reflektionsfläche
500 Bauelementeträger
60 Distanzmessung
70 Kontrollmessung

## Patentansprüche

1. Lichtlaufzeitkamerasystem (1),
mit einem als PMD-Sensor ausgebildeten Photosensor (22), der mindestens ein Empfangspixel aufweist,
mit einer Beleuchtungslichtquelle (10, 12),
und mit einem Modulator (30), der ein Modulationssignal für den Photosensor (22) und die Beleuchtungslichtquelle (10, 12) bereitstellt,
**dadurch gekennzeichnet,**
**dass** im Bereich der Beleuchtungslichtquelle (10, 12) ein Kontrollsensor (150) derart angeordnet ist, dass von dem Kontrollsensor (150) zumindest ein Teil einer von der Beleuchtungslichtquelle (10, 12) emittierten Strahlung empfangbar ist,
und der Kontrollsensor (150) ein Ausgangssignal in Abhängigkeit des zeitlichen Verlaufs der empfangenen Strahlung zur Verfügung stellt,
und **dass** der Kontrollsensor (150) über einen elektrischen Übertragungskanal (320) mit mindestens einer Referenzlichtquelle (260, 270), die einen Referenzphotosensor (280) und/oder den Photosensor (22) beleuchtet, verbunden ist.

2. Lichtlaufzeitkamerasystem (1) nach Anspruch 1, bei dem der elektrische Übertragungskanal (320) für eine digitale Übertragung des Ausgangssignals des Kontrollsensors (150) ausgebildet ist.

3. Lichtlaufzeitkamerasystem (1) nach Anspruch 1, bei dem eine erste Referenzlichtquelle (260) zur Beleuchtung des Referenzphotosensors (280) und eine zweite Referenzlichtquelle (270) zur Beleuchtung des Photosensors (22) vorgesehen sind.

4. Verfahren zum Betreiben eines Lichtlaufzeitkamerasystems (1)
- bei dem in einem Distanzmessintervall ein moduliertes Licht von einer Beleuchtungsquelle (10, 12) emittiert wird und ausgehend von einer Lichtlaufzeit, insbesondere einer Phasenverschiebung, für wenigstens ein Pixel eines Photosensors (22) ein Entfernungssignal ermittelt wird,
- bei dem mit Hilfe eines Kontrollsensors (150) ein Teil des von der Beleuchtungsquelle (10, 12) emittierten Lichts erfasst und in Abhängigkeit des erfassten Lichts ein Ausgangssignal zur Verfügung gestellt wird,
**dadurch gekennzeichnet,**
**dass** in Abhängigkeit des vom Kontrollsensor (150) erfassten Lichts bzw. dessen Ausgangssignals mindestens eine Referenzlichtquelle (260, 270), die einen Referenzphotosensor (280) und/oder den Photosensor (22) beleuchtet,
betrieben wird,
wobei Signale des elektrischen Mischers, des Referenzphotosensors (280) und/oder des Photosensors (22) im Hinblick auf eine fehlerfreie Funktion des Signalpfads ausgewertet und/oder Kompensationsmaßnahmen hinsichtlich der Distanzmessung eingeleitet werden..

5. Verfahren nach Anspruch 4 für ein Lichtlaufzeitkamerasystem (1) mit einem elektrischen Mischer, bei dem die Signale des elektrischen Mischers im Hinblick auf eine fehlerfreie Funktion des Signalpfads ausgewertet und/oder Kompensationsmaßnahmen hinsichtlich der Distanzmessung eingeleitet werden.

6. Verfahren nach Anspruch 4 für eine Lichtlaufzeitkamerasystem (1) mit mindestens einer Referenzlichtquelle (260, 270), bei der in einem Kontrollintervall bzw. einer Kontrollmessung (70) die mindestens eine Referenzlichtquelle (260, 270) den Photosensor (22) beleuchtet und die Signale des Photosensors (22) im Hinblick auf eine fehlerfreie Funktion des Signalpfads und/oder Photosensors ausgewertet werden und/oder Kompensationsmaßnahmen hinsichtlich der Distanzmessung eingeleitet werden.

7. Verfahren für ein Lichtlaufzeitkamerasystem (1) mit mindestens einer Referenzlichtquelle (260, 270) nach einem der vorhergehenden Verfahrensansprüche, bei dem während dem Distanzmessintervall (60) und/oder der Kontrollmessung (70) der Referenzphotosensor (280) mit Hilfe einer ersten Referenzlichtquelle (260) beleuchtet wird und ausgehend von Signalen des Referenzphotosensors (280) eine Fehlfunktion des Lichtlaufzeitkamerasystems (1) erkannt wird und/oder Kompensationsmaßnahmen hinsichtlich der Distanzmessung eingeleitet werden.

8. Verfahren nach Anspruch 6,
bei dem der Photosensor (22) vor oder nach einer oder mehreren Distanzmessungen (60) bzw. Phasenmessungen (60.1, 60.2 ...) in einer Kontrollmessung (70) mit Hilfe einer zweiten Referenzlichtquelle (270) beleuchtet wird.

9. Verfahren für eine Lichtlaufzeitkamera (1) mit mindestens einer Referenzlichtquelle (260, 270) nach einem der vorhergehenden Verfahrensansprüche, bei dem mindestens eine Referenzlichtquelle (260, 270) in einem Testbetrieb mit einem Testsignal beaufschlagt wird.

## Claims

1. Time-of-flight camera system (1),
having a photosensor (22) configured as a PMD sensor,
having at least one receiving pixel,
having an illumination light source (10, 12),
and having a modulator (30) providing a modulation signal for the photosensor (22) and the illumination light source (10, 12),
**characterized**
**in that** a monitoring sensor (150) is arranged in the region of the illumination light source(10, 12) such that at least some of a radiation emitted by the illumination light source (10, 12) is receivable by the monitoring sensor (150),
and the monitoring sensor (150) provides an output signal in dependence on the time profile of the received radiation,
and **in that** the monitoring sensor (150) is connected, via an electric transmission channel (320), to at least one reference light source (260, 270) that illuminates a reference photosensor (280) and/or the photosensor (22).

2. Time-of-flight camera system (1) according to Claim 1, in which the electric transmission channel (320) is configured for a digital transmission of the output signal of the monitoring sensor (150).

3. Time-of-flight camera system (1) according to Claim 1, in which a first reference light source (260) is provided for illuminating the reference photosensor (280) and a second reference light source (270) is provided for illuminating the photosensor (22).

4. Method for operating a time-of-flight camera system (1)
- in which a modulated light is emitted by an illumination source (10, 12) in a distance measurement interval and, based on a time-of-flight time, in particular a phase shift, a distance signal is ascertained for at least one pixel of a photosensor (22),
- in which a monitoring sensor (150) is used to capture some of the light emitted by the illumination source (10, 12) and provides an output signal in dependence on the captured light,
**characterized**
**in that** at least one reference light source (260, 270), which illuminates a reference photosensor (280) and/or the photosensor (22), is operated in dependence on the light captured by the monitoring sensor (150) or on the output signal thereof,
wherein signals of the electric mixer, of the reference photosensor (280) and/or of the photosensor are evaluated with respect to an error-free function of the signal path and/or compensation measures with respect to the distance measurement are initiated.

5. Method according to Claim 4 for a time-of-flight camera system (1) having an electric mixer, in which the signals of the electric mixer are evaluated with respect to an error-free function of the signal path and/or compensation measures with respect to the distance measurement are initiated.

6. Method according to Claim 4 for a time-of-flight camera system (1) having at least one reference light source (260, 270), in which the at least one reference light source (260, 270) illuminates the photosensor (22) in a monitoring interval or a monitoring measurement (70), and the signals of the photosensor (22) are evaluated with respect to an error-free function of the signal path and/or of the photosensor, and/or compensation measures with respect to the distance measurement are initiated.

7. Method for a time-of-flight camera system (1) having at least one reference light source (260, 270) according to one of the preceding method claims, in which the reference photosensor (280) is illuminated by way of a first reference light source (260) during the distance measurement interval (60) and/or the monitoring measurement (70), and, based on signals of the reference photosensor (280), an error function of the time-of-flight camera system (1) is detected and/or compensation measures with respect to the distance measurement are initiated.

8. Method according to Claim 6, in which the photosensor (22) is illuminated by way of a second reference light source (270) in a monitoring measurement (70) before or after one or more distance measurements (60) or phase measurements (60.1, 60.2...).

9. Method for a time-of-flight camera (1) having at least one reference light source (260, 270) according to one of the preceding method claims, in which at least one reference light source (260, 270) is supplied with a test signal during a testing mode.

## Revendications

1. Système de caméra à temps de propagation de la lumière (1),
comprenant un photodétecteur (22) réalisé sous la forme d'un détecteur PMD, lequel possède au moins un pixel de réception,
comprenant une source de lumière d'éclairage (10, 12), et comprenant un modulateur (30) qui délivre un signal de modulation pour le photodétecteur (22) et la source de lumière d'éclairage (10, 12),
**caractérisé**
**en ce qu'**un détecteur de contrôle (150) est disposé dans la zone de la source de lumière d'éclairage (10, 12) de telle sorte que le détecteur de contrôle (150) peut recevoir au moins une partie d'un rayonnement émis par la source de lumière d'éclairage (10, 12),
et le détecteur de contrôle (150) met à disposition un signal de sortie en fonction du tracé dans le temps du rayonnement reçu,
et **en ce que** le détecteur de contrôle (150) est relié par le biais d'un canal de transmission électrique (320) à au moins une source de lumière de référence (260, 270) qui éclaire un photodétecteur de référence (280) et/ou le photodétecteur (22).

2. Système de caméra à temps de propagation de la lumière (1) selon la revendication 1, avec lequel le canal de transmission électrique (320) est configuré pour une transmission numérique du signal de sortie du détecteur de contrôle (150).

3. Système de caméra à temps de propagation de la lumière (1) selon la revendication 1, avec lequel il existe une première source de lumière de référence (260) destinée à éclairer le photodétecteur de référence (280) et une deuxième source de lumière de référence (270) destinée à éclairer le photodétecteur (22).

4. Procédé pour faire fonctionner un système de caméra à temps de propagation de la lumière (1),
- selon lequel une lumière modulée est émise par une source d'éclairage (10, 12) dans un intervalle de mesure de distance et un signal d'éloignement est déterminé pour au moins un pixel d'un photodétecteur (22) en partant d'un temps de propagation de la lumière, notamment d'un déphasage,
- selon lequel une partie de la lumière émise par la source d'éclairage (10, 12) est détectée par un détecteur de contrôle (150) et un signal de sortie est mis à disposition en fonction de la lumière détectée, **caractérisé en ce que**
au moins une source de lumière de référence (260, 270), laquelle éclaire un photodétecteur de référence (280) et/ou le photodétecteur (22), est pilotée en fonction de la lumière détectée par le détecteur de contrôle (150) ou de son signal de sortie,
le signal du mélangeur, du photodétecteur de référence (280) et/ou du photodétecteur (22) étant interprété en vue de vérifier un fonctionnement sans défaut du trajet de signal et/ou des mesures de compensation étant initiées du point de vue de la mesure de distance.

5. Procédé selon la revendication 4 pour un système de caméra à temps de propagation de la lumière (1) comprenant un mélangeur électrique, selon lequel les signaux du mélangeur électrique sont interprétés en vue de vérifier un fonctionnement sans défaut du trajet de signal et/ou des mesures de compensation étant initiées du point de vue de la mesure de distance.

6. Procédé selon la revendication 4 pour un système de caméra à temps de propagation de la lumière (1) comprenant au moins une source de lumière de référence (260, 270), selon lequel l'au moins une source de lumière de référence (260, 270) éclaire le photodétecteur (22) dans un intervalle de contrôle ou une mesure de contrôle (70) et les signaux du photodétecteur (22) sont interprétés en vue de vérifier un fonctionnement sans défaut du trajet de signal et/ou du photodétecteur et/ou des mesures de compensation sont initiées du point de vue de la mesure de distance.

7. Procédé pour un système de caméra à temps de propagation de la lumière (1) comprenant au moins une source de lumière de référence (260, 270) selon l'une des revendications de procédé précédentes, selon lequel le photodétecteur de référence (280) est éclairé à l'aide d'une première source de lumière de référence (260) pendant l'intervalle de mesure de distance (60) et/ou la mesure de contrôle (70) et, à partir de signaux du photodétecteur de référence (280), un défaut de fonctionnement du système de caméra à temps de propagation de la lumière (1) est détecté et/ou des mesures de compensation sont initiées du point de vue de la mesure de distance.

8. Procédé selon la revendication 6, selon lequel le photodétecteur (22) est éclairé à l'aide d'une deuxième source de lumière de référence (270) dans une mesure de contrôle (70) avant ou après une ou plusieurs mesures de distance (60) ou mesures de phase (60.1, 60.2, ...).

9. Procédé pour une caméra à temps de propagation de la lumière (1) comprenant au moins une source de lumière de référence (260, 270) selon l'une des revendications de procédé précédentes, selon lequel, dans un mode de test, l'au moins une source de lumière de référence (260, 270) est alimentée avec un signal de test.
